# EUROPEAN PATENT APPLICATION

(11) **EP 4 575 982 A1**
(43) Date of publication of application: **25.06.2025**
(21) Application number: 23217817.8
(22) Date of filing: 19.12.2023
(51) Int. Cl.: G06T 7/00

(54) **DETECTION AND LOCALIZATION OF CEREBRAL VENOUS SINUS THROMBOSIS**

(71) Applicant: Bayer AG, 51373 Leverkusen (DE)
(72) Inventor: The designation of the inventor has not yet been filed
(74) Representative: BIP Patents

(57) **Abstract**

The present disclosure relates to computer-implemented methods for the detection and/or localization of cerebral venous sinus thrombosis (CVST) in a patient and to the generation of synthetic venograms from CT or MRI images and their use in computed-implemented methods for the detection and/or localization of CYST in a patient.

## Description

### FIELD OF THE DISCLOSURE

Systems, methods, and computer programs disclosed herein relate to the detection and/or localization of cerebral venous sinus thrombosis (CVST) in a patient and to the generation of synthetic venograms from CT and/or MRI images and their use in computed-implemented methods for the detection and/or localization of CVST.

### BACKGROUND

Cerebral venous sinus thrombosis (CVST) is a cerebrovascular disease with various clinical manifestations, often affecting young adults, women of child-bearing age, and children. In cerebral venous sinus thrombosis, blood clots form in the veins that drain blood from the brain, the sinuses, and cerebral veins. They can cause severe headaches, confusion, and stroke-like symptoms. They can lead to bleeding into the surrounding brain tissue.

CVST may manifest as a single symptom or as a syndrome with multiple symptoms. This nonspecific clinical presentation makes the diagnosis of CVST difficult. CVST is often overlooked or diagnosed late because it can mimic other acute neurologic conditions. The diagnosis of CVST is often delayed or overlooked in the emergency room (ER) due to the diversity of clinical symptoms. So far, magnetic resonance imaging (MRI) has been used to detect CVST (Yang X, Yu P, Zhang H, Zhang R, Liu Y, Li H, Sun P, Liu X, Wu Y, Jia X, Duan J, Ji X, Yang Q. Deep Learning Algorithm Enables Cerebral Venous Thrombosis Detection With Routine Brain Magnetic Resonance Imaging. Stroke. 2023 May;54(5):1357-1366. doi: 10.1161/STROKEAHA. 122.041520. Epub 2023 Mar 13. PMID: 36912139). However, MRI is a lengthy procedure. Computed tomography (CT) is much faster and takes significantly less time than MRI. However, the low sensitivity of CT is a notable drawback which prevents its use in CVST detection and/or location.

Although the mortality rate associated with cerebral sinus thrombosis is less than 10%, delayed intervention can result in permanent disability (stroke). With appropriate treatment in a comprehensive stroke center, 80-90% of patients can make a full recovery.

Thus, there is a need for reliable detection of CVST in a patient which identifies CVST and prevents its misdiagnosis given similar clinical symptoms and/or manifestations as other neurological conditions. In particular, there is a need for the reliable detection of CVST which allows for a reduced time to diagnosis and therefore to treatment initiation, which may lead to an increased number of patients making a full recovery. In particular, there is a need for reliable detection of CVST using computed tomography (CT).

### SUMMARY

This task is solved by the subject matter of the independent claims of the present disclosure. Preferred embodiments are defined in the dependent claims, the description, and the drawings.

In a first aspect, the present disclosure relates to a computer-implemented method for generating a tool for detecting cerebral venous sinus thrombosis in a patient, the method comprising the steps:
- providing training data, the training data comprising for each reference patient of a multitude of reference patients
   (i) at least one CT image of the brain of the reference patient, and
   (ii) an information on whether or not the reference patient had cerebral venous sinus thrombosis at the time when the at least one CT image was obtained
- providing a machine learning model, wherein the machine learning model is configured to
   ∘ receive the at least one CT image of the reference patient,
   ∘ generate radiomics features based on the at least one CT image of the reference patient,
   ∘ generate vision transformer features based on the at least one CT image of the reference patient,
   ∘ generate convolutional neural network features based on the at least one CT image of the reference patient,
   ∘ fuse the radiomics features, the vision transformer features and the convolutional neural network features into a joint feature vector,
   ∘ assign the reference patient to one of at least two classes based on the joint feature vector, with at least one class including reference patients who have cerebral venous sinus thrombosis,
   ∘ output information to which class the reference patient was assigned,
- training the machine learning model with the training data, wherein the training of the machine learning model comprises the steps:
   for each reference patient:
   ∘ inputting the at least one CT image of the reference patient into the machine learning model,
   ∘ receiving an output from the machine learning model,
   ∘ determining a deviation between the output and the information whether the reference patient suffers from cerebral venous sinus thrombosis,
   ∘ reducing the deviation by modifying parameters of the machine learning model,
- outputting and/or storing the trained machine learning model and/or transmitting the trained model to a separate computer system and/or using the trained machine learning model to detect cerebral venous sinus thrombosis in a patient.

In a preferred embodiment, the training data additionally comprises non-image clinical data for each reference patient of a multitude of reference patients. Preferably, the assignment of the reference patient to one of at least two classes, wherein at least one class includes reference patients who have cerebral venous sinus thrombosis, is made based on the combination of the joint feature vector and of information obtained from additional non-image clinical data.

In another aspect, the present disclosure provides a computer-implemented method for detecting cerebral venous sinus thrombosis in a patient, the method comprising the steps:
- receiving patient data, the patient data comprising at least one CT image of the brain of the patient,
- providing a trained machine learning model,
   ∘ wherein the machine learning model is configured to
      ▪ receive the at least one CT image of the patient,
      ▪ generate radiomics features based on the at least one CT image of the patient,
      ▪ generate vision transformer features based on the at least one CT image of the patient,
      ▪ generate convolutional neural network features based on the at least one CT image of the patient,
      ▪ fuse the radiomics features, the vision transformer features and the convolutional neural network features into a joint feature vector,
      ▪ assign the reference patient to one of at least two classes based on the joint feature vector, with at least one class including patients who have cerebral venous sinus thrombosis,
      ▪ output information to which class the patient was assigned,
   ∘ wherein the trained machine learning model was trained on training data, wherein the training data included, for each reference patient of a multitude of reference patients, (i) at least one CT image of the brain of the reference patient, and (ii) an information on whether or not the reference patient had cerebral venous sinus thrombosis at the time when the at least one CT image was obtained,
   ∘ wherein the training included the following steps:
      for each reference patient:
      ▪ inputting the at least one CT image of the reference patient data into the machine learning model,
      ▪ receiving an output from the machine learning model,
      ▪ determining a deviation between the output and the information whether the reference patient suffers from cerebral venous sinus thrombosis,
      ▪ reducing the deviation by modifying parameters of the machine learning model,
- inputting the at least one CT image of the patient into the trained machine learning model,
- receiving from the trained machine learning model information to which class the patient was assigned,
- outputting and/or storing the information to which class the patient was assigned, and/or transmitting the information to which class the patient was assigned to a separate computer system.

In a preferred embodiment, the training data and/or the patient data additionally comprises non-image clinical data for the patient and for each reference patient of the multitude of reference patients. Preferably, the assignment of the patient and each reference patient to one of at least two classes, wherein at least one class includes (reference) patients who have cerebral venous sinus thrombosis, is made based on the combination of the joint feature vector and of information obtained from additional non-image clinical data.

In another aspect, the present disclosure relates to a computer-implemented method for generating a tool for determining the location of cerebral venous sinus thrombosis in a patient suffering from CVST, the method comprising the steps:
- providing training data, the training data comprising for each reference patient of a multitude of reference patients
   (i) at least one CT image of the brain of the reference patient, and
   (ii) an information about the location of cerebral venous sinus thrombosis in the brain of the reference patient at the time when the at least one CT image was obtained
- providing a machine learning model, wherein the machine learning model is configured to
   ∘ receive the at least one CT image of the reference patient,
   ∘ generate vision transformer attention maps based on the at least one CT image of the reference patient,
   ∘ generate convolutional neural network segmentation masks based on the at least one CT image of the reference patient,
   ∘ combine the vision transformer attention maps and the convolutional neural network segmentation masks into a combined (segmentation) mask,
   ∘ determine a region in the brain of the reference patient where cerebral venous sinus thrombosis is located based on the combined (segmentation) mask,
   ∘ output information about the location of cerebral venous sinus thrombosis in the brain of the reference patient,
- training the machine learning model with the training data, wherein the training of the machine learning model comprises the steps:
   for each reference patient:
   ∘ inputting the at least one CT image of the reference patient into the machine learning model,
   ∘ receiving an output from the machine learning model,
   ∘ determining a deviation between the output and the information about the location of cerebral venous sinus thrombosis in the brain of the reference patient,
   ∘ reducing the deviation by modifying parameters of the machine learning model,
- outputting and/or storing the trained machine learning model and/or transmitting the trained model to a separate computer system and/or using the trained machine learning model to determine a location of cerebral venous sinus thrombosis in a patient.

In another aspect, the present disclosure provides a computer-implemented method for determining the location of cerebral venous sinus thrombosis in a patient suffering from CVST, the method comprising the steps:
- receiving patient data, the patient data comprising at least one CT image of the brain of the patient,
- providing a trained machine learning model,
   ∘ wherein the machine learning model is configured to
      ∘ receive the at least one CT image of the patient,
      ∘ generate vision transformer attention maps based on the at least one CT image of the patient,
      ∘ generate convolutional neural network segmentation masks based on the at least one CT image of the patient,
      ∘ combine the vision transformer attention maps and the convolutional neural network segmentation masks into a combined (segmentation) mask,
      ∘ detect a region in the brain of the patient where cerebral venous sinus thrombosis is located,
      ∘ output information about the location of cerebral venous sinus thrombosis in the brain of the patient,
   ∘ wherein the trained machine learning model was trained on training data, wherein the training data included, for each reference patient of a multitude of reference patients, (i) at least one CT image of the brain of the reference patient, and (ii) an information about the location of cerebral venous sinus thrombosis in the brain of the reference patient at the time when the at least one CT image was obtained,
   ∘ wherein the training included the following steps:
      for each reference patient:
      ▪ inputting the at least one CT image of the reference patient into the machine learning model,
      ▪ receiving an output from the machine learning model,
      ▪ determining a deviation between the output and the information about the location of cerebral venous sinus thrombosis in the brain of the reference patient,
      ▪ reducing the deviation by modifying parameters of the machine learning model,
- inputting the at least one CT image of the patient into the trained machine learning model,
- receiving from the trained machine learning model information about a location of cerebral venous sinus thrombosis in the brain of the patient,
- outputting the information about a location of cerebral venous sinus thrombosis in the brain of the patient, storing the information about a location of cerebral venous sinus thrombosis in the brain of the patient and/or transmitting the information about a location of cerebral venous sinus thrombosis in the brain of the patient to a separate computer system.

In another aspect, the present disclosure provides a computer-implemented method for detecting the presence and determining the location of cerebral venous sinus thrombosis in a patient, the method comprising the steps:
- receiving patient data, the patient data comprising at least one CT image of the brain of the patient,
- providing a trained machine learning model,
   ∘ wherein the machine learning model is configured to
      ▪ receive the at least one CT image of the patient,
      ▪ generate radiomics features based on the at least one CT image of the patient,
      ▪ generate vision transformer features based on the at least one CT image of the patient,
      ▪ generate convolutional neural network features based on the at least one CT image of the patient,
      ▪ fuse the radiomics features, the vision transformer features and the convolutional neural network features into a joint feature vector,
      ▪ assign the patient to one of at least two classes based on the joint feature vector, with at least one class including patients who have cerebral venous sinus thrombosis,
      ▪ output information to which class the patient was assigned,
   ∘ wherein the machine learning model is also configured to
      ▪ receive the at least one CT image of the patient,
      ▪ generate vision transformer attention maps based on the at least one CT image of the patient,
      ▪ generate convolutional neural network segmentation masks based on the at least one CT image of the patient,
      ▪ combine the vision transformer attention maps and the convolutional neural network segmentation masks into a combined (segmentation) mask,
      ▪ detect a region in the brain of the patient where cerebral venous sinus thrombosis is located based on the combined (segmentation) mask,
      ▪ output information about the location of cerebral venous sinus thrombosis in the brain of the patient,
   ∘ wherein the trained machine learning model was trained on training data, wherein the training data included, for each reference patient of a multitude of reference patients, (i) at least one CT image of the brain of the reference patient, (ii) an information on whether or not the reference patient had cerebral venous sinus thrombosis at the time when the at least one CT image was obtained, and (iii) an information about the location of cerebral venous sinus thrombosis in the brain of the reference patient at the time when the at least one CT image was obtained,
   ∘ wherein the training included the following steps:
      for each reference patient:
      ▪ inputting the at least one CT image of the reference patient into the machine learning model,
      ▪ receiving an output from the machine learning model, said output comprising information as to which class the reference patient was assigned and about a location of cerebral venous sinus thrombosis in the brain of the reference patient,
      ▪ determining a deviation (i) between the output and the information whether the reference patient suffers from thrombosis and (ii) between the output and the information about the location of cerebral venous sinus thrombosis in the brain of the reference patient,
      ▪ reducing the deviation (i) between the output and the information whether the reference patient suffers from thrombosis and/or (ii) between the output and the information about the location of cerebral venous sinus thrombosis in the brain of the reference patient by modifying parameters of the machine learning model,
- inputting the at least one CT image of the patient into the trained machine learning model,
- receiving from the trained machine learning model information to which class the patient was assigned and information about a location of cerebral venous sinus thrombosis in the brain of the reference patient,
- outputting the information to which class the patient was assigned and/or about the location of cerebral venous sinus thrombosis in the brain of the patient, storing the information to which class the patient was assigned and/or about the location of cerebral venous sinus thrombosis in the brain of the patient and/or transmitting the information to which class the patient was assigned and/or about the location of cerebral venous sinus thrombosis in the brain of the patient to a separate computer system.

In a preferred embodiment, the training data and/or the patient data additionally comprises non-image clinical data for each patient and each reference patient of the multitude of (reference) patients which can be used in the detection and localization of CVST. Preferably, the assignment of the patient and each reference patient to one of at least two classes, wherein at least one class includes (reference) patients who have cerebral venous sinus thrombosis, is made based on the combination of the joint feature vector and of information obtained from additional non-image clinical data.

In a further aspect, the present disclosure relates to a computer-implemented method for the generation of synthetic venograms, the method comprising the steps:
- receiving patient data, the patient data comprising at least one CT image and/or at least one MRI image of the brain of the patient,
- providing a trained GAN-based prediction model, wherein the prediction model is configured to
   ∘ receive the patient data,
   ∘ generate a synthetic venogram based on said patient data,
      wherein the prediction model was trained on the basis of training data, wherein the training data included, for each reference patient of a multitude of reference patients, (i) at least one CT image and/or the at least one MRI image of the brain of the reference patient, and (ii) at least one venogram of the brain of the reference patient,
      wherein the training included the following steps, for each reference patient:
   ∘ inputting the at least one CT image and/or the at least one MRI image of the brain of the reference patient into the GAN-based prediction model,
   ∘ receiving a synthetic venogram generated from the at least one CT image and/or the at least one MRI image of the brain of the reference patient,
- inputting the patient data into the prediction model,
- receiving a synthetic venogram from the prediction model,
- outputting the synthetic venogram, storing the synthetic venogram and/or transmitting the synthetic venogram to a separate computer system.

In a further aspect, the present disclosure provides a computer system comprising (i) a processor; and (ii) a memory storing an application program configured to perform, when executed by the processor, an operation, the operation comprising any of the computer-implemented methods described throughout the present disclosure, e.g., a computer-implemented method for generating a tool for detecting cerebral venous sinus thrombosis in a patient, a computer-implemented method for detecting cerebral venous sinus thrombosis in a patient, a computer-implemented method for generating a tool for determining the location of cerebral venous sinus thrombosis in a patient suffering from CVST, a computer-implemented method for determining the location of cerebral venous sinus thrombosis in a patient suffering from CVST, a computer-implemented method for detecting the presence and determining the location of venous sinus thrombosis in a patient and/or a computer-implemented method for the generation of synthetic venograms.

In a further aspect, the present disclosure provides a non-transitory computer readable storage medium having stored thereon software instructions that, when executed by a processor of a computer system, cause the computer system to execute any of the computer-implemented methods described throughout the present disclosure, e.g., a computer-implemented method for generating a tool for detecting cerebral venous sinus thrombosis in a patient, a computer-implemented method for detecting cerebral venous sinus thrombosis in a patient, a computer-implemented method for generating a tool for determining the location of cerebral venous sinus thrombosis in a patient suffering from CVST, a computer-implemented method for determining the location of cerebral venous sinus thrombosis in a patient suffering from CVST, a computer-implemented method for detecting the presence and determining the location of venous sinus thrombosis in a patient and/or a computer-implemented method for the generation of synthetic venograms.

### BRIEF DESCRIPTION OF THE FIGURES

Fig. 1 shows schematically an embodiment of the computer-implemented method for generating a tool for detecting cerebral venous sinus thrombosis in a patient according to the present disclosure in form of a flow chart.
Fig. 2 shows schematically an embodiment of the computer-implemented method for detecting cerebral venous sinus thrombosis in a patient according to the present disclosure in form of a flow chart.
Fig. 3 shows schematically an embodiment of the computer-implemented method for generating a tool for determining the location of cerebral venous sinus thrombosis in a patient suffering from CVST according to the present disclosure in form of a flow chart.
Fig. 4 shows schematically an embodiment of the computer-implemented method for determining the location of cerebral venous sinus thrombosis in a patient suffering from CVST according to the present disclosure in form of a flow chart.
Fig. 5 shows schematically an embodiment of the computer-implemented method for detecting the presence and determining the location of venous sinus thrombosis in a patient according to the present disclosure in form of a flow chart.
Fig. 6 shows schematically an embodiment of the computer-implemented method for the generation of synthetic venograms according to the present disclosure in form of a flow chart.
Fig. 7 shows schematically a computer system (1) according to some example computer-implemented methods of the present disclosure in more detail.

### DETAILED DESCRIPTION

The invention will be more particularly elucidated below without distinguishing between the aspects of the invention (method, computer system, computer-readable storage medium). On the contrary, the following elucidations are intended to apply analogously to all the aspects of the invention, irrespective of in which context (method, computer system, computer-readable storage medium) they occur.

If steps are stated in an order in the present description or in the claims, this does not necessarily mean that the invention is restricted to the stated order. On the contrary, it is conceivable that the steps can also be executed in a different order or else in parallel to one another, unless one step builds upon another step, this absolutely requiring that the building step be executed subsequently (this being, however, clear in the individual case). The stated orders are thus preferred embodiments of the present disclosure.

As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

In the context of the present disclosure, terms like "patient(s)" and/or "reference patient(s)", "patient data", "reference patient data", "the at least one CT image of the patient", "the at least one CT image of the reference patient" and the like are used. Whenever the term "reference" is used in relation to a patient or its data - e.g., as in "reference patient" and /or "the at least one CT image of the reference patient" - the corresponding disclosure refers to the training of a machine learning model. Thus, a "reference patient" is one whose data - i.e., the "reference patient data" which e.g., comprises "at least one CT image of the reference patient" is used in the training of a machine learning model in any of the computer-implemented methods of the present disclosure.

The computer-implemented methods described in the context of the present disclosure, make use of machine learning models. In the context of the present invention, the term "machine learning model" may comprise a single machine learning model, several identical machine learning models or several combined machine learning models.

In one aspect, the present disclosure relates to the detection of CYST in a patient. The computer-implemented method for generating a tool for detecting cerebral venous sinus thrombosis in a patient as well as the computer-implemented method for detecting cerebral venous sinus thrombosis in a patient require the provision of training data. Said training data comprises, for each reference patient of a multitude of reference patients, (i) at least one CT image of the brain of the reference patient, and (ii) an information on whether or not the reference patient had cerebral venous sinus thrombosis at the time when the at least one CT image was obtained. The training data may additionally comprise non-image data from the reference patient. There is no limitation to the nature of the additional non-image data as long as it provides additional information about the reference patient which is useful as training data. Such additional data may comprise e.g., additional clinical data such as laboratory data, laboratory analysis data, laboratory values, clinical history, information about the reference patient's risk factors, previous medical reports and the like. Depending on its nature, the additional data can be processed to extract text features (e.g., if complete reports are available) or factor-based condition classifiers (e.g., if prefilled data tables are available). The additional information obtained from the supplementary non-image data is useful to more accurately assign the reference patient to one of at least two classes, with at least one class including reference patients who have cerebral venous sinus thrombosis. Without being limiting, the additional information obtained from non-image data can be (i) in the form of a feature vector, which can be combined with the joint feature vector obtained from fusing the radiomics features, the vision transformer features and the convolutional neural network features or (ii) provided as additional input to assign the reference patient to one of at least two classes, with at least one class including reference patients who have cerebral venous sinus thrombosis.

In another aspect, the present disclosure relates to the localization of cerebral venous sinus thrombosis in a patient suffering from CVST. The computer-implemented method for generating a tool for determining the location of cerebral venous sinus thrombosis in a patient suffering from CVST as well as the computer-implemented method for determining the location of cerebral venous sinus thrombosis in a patient suffering from CVST require the provision of training data. Said training data comprises, for each reference patient of a multitude of reference patients, (i) at least one CT image of the brain of the reference patient, and (ii) an information about the location of cerebral venous sinus thrombosis in the brain of the reference patient at the time when the at least one CT image was obtained.

The term "multitude" preferably means more than ten, even more preferably more than one hundred.

The at least one CT image of the brain of the reference patient is preferably a CT image of the reference patient's brain acquired according to routine methods for computed tomography available in the art.

The methods of the present disclosure do not exclude the use of more than one CT image as training and/or patient data. Similarly, they do not exclude the use of further image data as training and/or patient data. Without being limiting, such additional image data may be in the form of one or more MRI images, one or more venography images (venograms) or any other form suitable as training and/or patient data. The use of more than one CT image and/or of more one or more MRI images and/or one or more venography images (venograms) is a preferred embodiment of the computer-implemented methods of the present disclosure. Thus, in any of the computer-implemented methods of the present invention, any reference made to the "at least one CT image" and/or to any process step, modification, transformation and the like involving the "at least one CT image" is also applicable not only to said "at least one CT image" but also to further CT images and/or to further image data used as training and/or patient data.

The images used as training and/or patient data, i.e., the at least one CT image and/or any additional images used in the computer-implemented methods of the present disclosure, may need a so-called "pre-processing" step prior to their use in any of the computer-implemented methods of the present disclosure. Without being limiting, such "pre-processing" step may comprise the removal of the skull from the image, the alignment of the image(s) to an axis of symmetry, the extraction of symmetry patches from both - i.e., left and right - sides of the image(s), the normalization of the images, the downsampling of the images up to three or four stages and any other processes which enable the provision of (a) coherent, comparable and homogeneous image(s). Such a "pre-processing" step thus provides normalized, full-size symmetric image(s), two-dimensional patches from both - i.e., left and right - sides of the image(s) and multiscale image(s).

The information about whether or not the reference patient had cerebral venous sinus thrombosis at the time when the at least one CT image was obtained is available upon examination of the at least one CT image of the brain of the reference patient by a medically trained professional, e.g., a doctor and/or a radiologist capable of determining the existence of cerebral venous sinus thrombosis.

The information about the location of cerebral venous sinus thrombosis in the brain of the reference patient at the time when the at least one CT image was obtained is available upon examination of the at least one CT image of the brain of the reference patient by a medically trained professional, e.g., a doctor and/or a radiologist capable of determining the existence of cerebral venous sinus thrombosis. In order to be suitable for the computer-implemented methods of the present disclosure relating to the localization of cerebral venous sinus thrombosis in a patient suffering from CVST, it may be preferable to pre-process the at least one CT image *via* thresholding and/or bounding box detection in order to accurately assign the location of cerebral venous sinus thrombosis in the at least one CT image. In a preferred embodiment, the at least one CT image is pre-processed *via* thresholding and/or bounding box detection. In a preferred embodiment, the pixels in the at least one CT image corresponding to the localization of cerebral venous sinus thrombosis have been tagged - i.e., identified and marked - by a medically trained professional, preferably *via* thresholding or *via* bounding box detection, or by a combination of any of the above.

Machine learning models are trained in the computer-implemented method for generating a tool for detecting cerebral venous sinus thrombosis in a patient and/or in the computer-implemented method for generating a tool for determining the location of cerebral venous sinus thrombosis in a patient suffering from CVST. Said trained machine learning models can be then used in a computer-implemented method for detecting cerebral venous sinus thrombosis in a patient and/or in a computer-implemented method for determining the location of cerebral venous sinus thrombosis in a patient suffering from CVST, respectively. Said trained machine learning models can also be used in a computer-implemented method which combines both the detection and the localization of CVST, i.e., a computer-implemented method for detecting and - if present - determining the location of cerebral venous sinus thrombosis in a patient.

In order to train said machine learning models, a series of features need to be extracted and/or generated from the at least one CT image of the brain of the reference patient. There is no limitation as to the methods with which said features are extracted and/or generated as long as they are suitable for use in the training of the machine learning models.

For CVST detection, one or more of radiomics features, vision transformer features and convolutional neural network features can be generated based on the at least one CT image. The present disclosure does not limit the method with which features are extracted and/or generated from the at least one CT image of the brain of the reference patient. Thus, additional features using additional methods, processes and/or tools available to the skilled person can be extracted and/or generated and then used to train the machine learning model.

In one embodiment of CVST detection, after receiving the at least one CT image of the brain of the reference patient, radiomics features are generated based on said at least one CT image. "Radiomics" is a method that extracts a large number of features from medical images using data-characterisation algorithms. There is no restriction as to the number, quality or characteristics of the radiomic features that are extracted from the at least one CT image. Detailed description of texture features for radiomics can be found, for example, in Parekh et al. ("Radiomics: a new application from established techniques". Expert Review of Precision Medicine and Drug Development. 1 (2): 207-226. doi:10.1080/23808993.2016.1164013. PMC 5193485. PMID 28042608.) and Depeursinge et al. ("An Introduction to Radiomics: An Evolving Cornerstone of Precision Medicine". Biomedical Texture Analysis. pp. 223-245. doi:10.1016/B978-0-12-812133-7.00008-9. ISBN 9780128121337.). There is no limitation as to the nature of the method for radiomics extraction as long as suitable radiomics features are obtained from the at least one CT image of the brain of the reference patient. In a preferred embodiment, the radiomics features comprise information about the shape, intensity and texture extracted from the full-sized symmetry patches of the at least one CT image.

In another embodiment of CVST detection and based on the at least one CT image of the brain of the reference patient, vision transformer features are generated. Vision transformers are an image-processing and image-classification tool which have emerged as an alternative to convolutional neural networks. They work by splitting an image - in the case of the present invention the at least one CT image of the brain of the reference patient - into fix-sized patches and by feeding the resulting sequence of vectors into a Transformer encoder (Dosovitskiy, Alexey; Beyer, Lucas; Kolesnikov, Alexander; Weissenborn, Dirk; Zhai, Xiaohua; Unterthiner, Thomas; Dehghani, Mostafa; Minderer, Matthias; Heigold, Georg; Gelly, Sylvain; Uszkoreit, Jakob (2021-06-03). "An Image is Worth 16x16 Words: Transformers for Image Recognition at Scale". arXiv:2010.11929). On larger datasets, they typically have higher precision rates with a reduced training time. There is no limitation as to the nature of the vision transformer as long as suitable vision transformer features are obtained from the at least one CT image of the brain of the reference patient. In a preferred embodiment, the vision transformer is DinoV2, a self-supervised vision transformer model developed by and available from Meta (https://dinov2.metademolab.com/).

In a further embodiment of CVST detection, based on the at least one CT image of the brain of the reference patient, convolutional neural network features are generated by using a convolutional neural network. There is no limitation as to the nature of the CNN as long as suitable convolutional neural network features are obtained from the at least one CT image of the brain of the reference patient.

Thus, the machine learning model is configured to generate different types of features, i.e., radiomics features, vision transformer features and/or convolutional neural network features from the input data, i.e., the at least one CT image of the brain of the reference patient. By generating and/or extracting different types of features, it can be ensured that the at least one CT image used as input is thoroughly and comprehensively analyzed and all its features extracted in order to perform the class assignment of the reference patient.

In a further step, the radiomics features, vision transformer features and/or convolutional neural network features generated and/or extracted from the at least one CT image of the brain of the reference patient are fused, i.e., combined into a joint feature vector. A feature vector is a vector containing multiple elements about an object.

A "feature vector" is a numerical representation of an object that captures relevant information about its characteristics or features. It is a structured collection of numerical values that describes the properties or attributes of the object being analyzed. Each element in the vector represents a specific feature or aspect of the object, and the combination of these elements forms a multidimensional representation.

Feature vectors are commonly used as input data in various machine learning algorithms, including classification, regression, and clustering. By representing data as feature vectors, machine learning models can analyze and make predictions based on the patterns and relationships between these features.

The term "vector" used in this disclosure also includes numbers, lists of numbers, vectors, matrices, tensors, and/or other arrangements of numbers.

Thus, a joint feature vector comprising elements of radiomics features, vision transformer features and/or convolutional neural network features from the at least one CT image of the brain of the reference patient is generated.

Based on said joint feature vector comprising elements of radiomics features, vision transformer features and/or convolutional neural network features, a classification can be made, thus assigning the patient to one of at least two classes, with at least one class including reference patients who have cerebral venous sinus thrombosis. In a preferred embodiment, a classifier is used to assign the patient to one of at least two classes.

Once the reference patient is assigned to one of at least two classes, wherein at least one class including reference patients who have cerebral venous sinus thrombosis, an output is generated which indicates which class, e.g., reference patients with CVST or reference patients without CVST, the reference patient has been assigned to. As described above, the assignment of the reference patient may be performed based on the joint feature vector and on additional information extracted from non-image clinical data. Said additional information extracted from non-image clinical data may derive from additional clinical data such as laboratory data, laboratory analysis data, laboratory values, clinical history, information about the reference patient's risk factors, previous medical reports and the like and may have been pre-processed in order to extract features that allow its combination with the joint feature vector. If additional information based on non-image clinical data is used, the generated output is based both on the joint feature vector and on said additional information. Thus, the additional information obtained from non-image data can be (i) in the form of a feature vector, which can be combined with the joint feature vector obtained from fusing the radiomics features, the vision transformer features and the convolutional neural network features or (ii) provided as additional input to assign the reference patient to one of at least two classes, with at least one class including reference patients who have cerebral venous sinus thrombosis.

Thus, in CVST detection, the machine learning model is trained with training data. Said training data comprises (i) at least one CT image of the brain of the reference patient, and (ii) an information on whether or not the reference patient had cerebral venous sinus thrombosis at the time when the at least one CT image was obtained but may also comprise additional information derived from non-image clinical data as described above. For each reference patient, the training of the machine learning model comprises at least (i) inputting the at least one CT image of the brain of the reference patient into the machine learning model (ii) obtaining an output from the machine learning model, (iii) determining a deviation between the output and the information about the reference patient's CVST status and (iv) reducing the deviation determined in step (iii) by modifying parameters of the machine learning model.

The deviation between the output delivered by the machine learning model and the information about the reference patient's CVST status may be a mismatch and/or discrepancy in reference the patient's CVST status. For example, the machine learning model's output may - based on the input data, i.e., the at least one CT image of the brain of the reference patient - determine that a reference patient does not suffer from CVST, while in fact the reference patient may have CVST, or vice versa. If this is the case, the deviation between the output delivered by the machine learning model and the information about the reference patient's CVST status can be reduced by modifying parameters of the machine learning model.

In summary, a computer-implemented method for generating a tool for detecting cerebral venous sinus thrombosis in a patient can be described as one in which based on training data, a machine learning model is configured to extract information from said training data and trained to first determine and then, if necessary, to reduce the deviation between the output delivered by the machine learning model and the information about the reference patient's CVST status.

The training data comprises at least one CT image of the brain of the reference patient and information about the reference patient's CVST status at the time the at least one CT image of the brain of the reference patient was generated, i.e., whether or not the reference patient had CVST at the time when the at least one CT image was obtained. The training data may additionally comprise non-image data from the reference patient. Preferably, the training data additionally comprises non-image clinical data for each reference patient of the multitude of reference patients.

The machine learning model is configured to extract a wide variety of data from the at least one CT image of the brain of the reference patient using one or more of different methods such as radiomics, vision transformers and/or convolutional neural networks. It can then fuse this data obtained from different methods into a joint feature vector based on which the reference patient can be assigned to one of at least two classes, one of which must include reference patients with CVST. Reference patient data may additionally comprise non-image data from the reference patient. Preferably, reference patient data additionally comprises non-image clinical data for each reference patient of the multitude of reference patients.

Based on this assignment, an output is generated. If a deviation between the output and the information about the reference patient's CVST status is detected - e.g., the output indicates that a reference patient does not suffer from CVST, while in fact the reference patient may have CVST, or vice versa - the machine learning model's parameters can be modified in order to reduce the deviation.

For CVST localization, vision transformer attention maps and convolutional neural network segmentation masks are generated. There is no limitation as to the methods with which said attention maps and/or segmentation masks are generated as long as they provide attention maps and convolutional neural network segmentation masks suitable for use in the training of the machine learning model. Thus, attention maps and segmentation masks using any methods, processes and/or tools available to the skilled person can be generated and then used to train the machine learning model. Preferably, vision transformer attention maps and convolutional neural network segmentation masks are generated based on the at least one CT image in order to train the machine learning model. In a preferred embodiment, vision transformer attention maps are generated using DinoV2, a self-supervised vision transformer model developed by and available from Meta (https://dinov2.metademolab.com/).

Thus, for CVST localization, the machine learning model is configured to extract different types of image data such as vision transformer attention maps and convolutional neural network segmentation masks from the input data, i.e., the at least one CT image of the brain of the reference patient. The generation of image data using different methods ensures that the at least one CT image of the reference patient used as input is thoroughly and comprehensively analyzed and the location of CVST in the brain of the reference patient accurately determined.

In a further step, the vision transformer attention maps and convolutional neural network segmentation masks generated from the at least one CT image of the brain of the reference patient are combined into a combined (segmentation) mask. In a preferred embodiment, the vision transformer attention maps and convolutional neural network segmentation masks are combined element-wise. Preferably, the vision transformer attention maps and convolutional neural network segmentation masks are combined using mathematical operations such as sum, weighted sum, multiplication, and/or the like. Thus, a combined (segmentation) mask comprising elements of the individually generated vision transformer attention maps and convolutional neural network segmentation masks using vision transformer tools and convolutional neural networks is generated.

In a further step, the region in the brain of the reference patient where cerebral venous sinus thrombosis is located is detected based on the combined (segmentation) mask. Preferably, detecting the region in the brain of the reference patient where cerebral venous sinus thrombosis is located is detected comprises post-processing the combined (segmentation) mask. Post-processing methods such as region proposal and/or thresholding can be employed. Preferably, bounding box detection is used for region proposal. Also preferably, segmentation is used for thresholding. Once the region in the brain of the reference patient where cerebral venous sinus thrombosis is located is determined, an output comprising information about the location of cerebral venous sinus thrombosis in the brain of the reference patient is generated. Preferably, the output is a bounding box or segmented region of the brain of the reference patient where CVST is located.

Thus, in the computer-implemented method for generating a tool for determining the location of cerebral venous sinus thrombosis in a patient suffering from CVST, a machine learning model is used which is trained with training data. For each reference patient, the training of the machine learning model comprises at least (i) inputting the at least one CT image of the brain of the reference patient into the machine learning model, (ii) obtaining an output from the machine learning model, (iii) determining a deviation between the output and the information about the location of cerebral venous sinus thrombosis in the brain of the reference patient and (iv) reducing the deviation determined in step (iii) by modifying parameters of the machine learning model.

In one embodiment, the deviation between the output delivered by the machine learning model and the information about the location of cerebral venous sinus thrombosis in the brain of the reference patient may be a mismatch and/or discrepancy in the location of the cerebral venous sinus thrombosis. For example, the machine learning model's output may - based on the input data, i.e., the at least one CT image of the brain of the reference patient - determine that cerebral venous sinus thrombosis is located in one region of the brain of the reference patient, while in fact the thrombosis may be located somewhere else, e.g., an adjacent and/or neighboring and/or overlapping region of the brain of the reference patient. If this is the case, the deviation between the output delivered by the machine learning model and the information about the location of cerebral venous sinus thrombosis in the brain of the reference patient can be reduced by modifying parameters of the machine learning model.

In summary, a computer-implemented method for generating a tool for determining the location of cerebral venous sinus thrombosis in a patient suffering from CVST can be described as one in which based on training data, a machine learning model is configured to extract information from said training data and trained to first determine and then, if necessary, to reduce the deviation between the output delivered by the machine learning model and the information about the location of cerebral venous sinus thrombosis in the brain of the reference patient.

The training data comprises at least one CT image of the brain of the reference patient and information about the location of cerebral venous sinus thrombosis in the brain of the reference patient at the time when the at least one CT image of the brain of the reference patient was obtained.

The machine learning model is configured to extract a wide variety of data in the form of attention maps and convolutional neural network segmentation masks from the at least one CT image of the brain of the reference patient using one or more of different methods such as vision transformers and/or convolutional neural networks. It can then fuse the attention maps and convolutional neural network segmentation masks obtained from different methods into a combined (segmentation) mask, based on which the region in the brain of the reference patient where CVST is located is detected. An output is then generated comprising information about the location of cerebral venous sinus thrombosis in the brain of the reference patient. If a deviation between the output and the information about the location of cerebral venous sinus thrombosis in the brain of the reference patient is detected - e.g., the output indicates that CVST is located in a region different (such as adjacent and/or neighboring and/or overlapping) to that where CVST is really located - the machine learning model's parameters can be modified in order to reduce the deviation.

In another aspect, the present invention relates to a computer-implemented method for detecting cerebral venous sinus thrombosis (CVST) in a patient.

In order to detect CVST in a patient, patient data, i.e., at least one CT image of the brain of the patient is provided. As described above, patient data may also comprise additional CT images and further image data, such as MRI images and venograms. Patient data may also additionally comprise non-image data from the patient. A trained machine learning model is also provided. Said trained machine learning model must have been trained on training data which, for each reference patient of a multitude of reference patients, includes (i) at least one CT image of the brain of said reference patient, and (ii) an information on whether or not the reference patient had CVST at the time when the at least one CT image of the reference patient was obtained. Additional image and/or non-image clinical data may have been provided to train the machine learning model. Said trained machine learning model is configured, as described above, to extract a wide variety of data from the at least one CT image of the brain of the patient using one or more of different methods such as radiomics, vision transformers and/or convolutional neural networks. It can then combine the data obtained from different methods into a joint feature vector based on which the patient can be assigned to one of at least two classes, one of which must include patients with CVST. If additional, non-image data is used, the additional information obtained from non-image data can be (i) in the form of a feature vector, which can be combined with the joint feature vector obtained from fusing the radiomics features, the vision transformer features and the convolutional neural network features or (ii) provided as additional input to assign the patient to one of at least two classes, with at least one class including patients who have cerebral venous sinus thrombosis. The trained machine learning model then outputs the information regarding the class the patient belongs to (e.g., patients with or without CVST). Based on this assignment, an output is generated.

The provided patient data, i.e., the at least one CT image of the brain of the patient and any additional non-image data is input into the trained machine learning model, which provides an output comprising information regarding the class the patient belongs to (e.g., patients with or without CVST). This information can then be further processed, i.e., it can be output, stored and/or transmitted into a separate computer system.

In another aspect, the present invention relates to a computer-implemented method for locating cerebral venous sinus thrombosis (CVST) in a patient.

In order to determine the location of cerebral venous sinus thrombosis in a patient suffering from CVST, patient data, i.e., at least one CT image of the brain of the patient is provided. As described above, patient data may also comprise additional CT images and further image data, such as MRI images and venograms. A trained machine learning model is also provided. Said trained machine learning model must have been trained on training data which, for each reference patient of a multitude of reference patients, includes (i) at least one CT image of the brain of said reference patient, and (ii) an information about the location of cerebral venous sinus thrombosis in the brain of the reference patient at the time when the at least one CT image was obtained. Said trained machine learning model is configured, as described above, to extract a data in the form of attention maps and convolutional neural network segmentation masks from the at least one CT image of the brain of the patient using one or more of different methods such as vision transformers and/or convolutional neural networks. It can then combine the obtained attention maps and convolutional neural network segmentation masks into a combined (segmentation) mask, based on which the region in the brain of the patient where CVST is located is detected. The trained machine learning model then outputs the information regarding the location of cerebral venous sinus thrombosis in the patient suffering from CVST.

The provided patient data, i.e., the at least one CT image of the brain of the patient, is input into the trained machine learning model, which provides an output comprising information regarding location of cerebral venous sinus thrombosis in a patient suffering from CVST. This information can then be further processed, i.e., it can be output, stored and/or transmitted into a separate computer system.

In another aspect, the present disclosure relates to a computer-implemented method for detecting the presence and determining the location of cerebral venous sinus thrombosis in a patient. Thus, the above-described computer-implemented methods for detecting the presence and determining the location of cerebral venous sinus thrombosis in a patient can be combined and used to both detect and, if present, determine the location of CVST in a patient.

Thus, a machine learning model may be trained as described above, based on training data, to provide an output comprising information as to the class a patient is assigned to, i.e., whether a patient suffers from cerebral venous sinus thrombosis and - if present - about the location of cerebral venous sinus thrombosis in the brain of the patient. In other words, the machine learning model is trained to provide two outputs, one regarding the presence or not of CVST in the patient and another one regarding the location of CVST in case the patient is assigned to a class representing patients suffering from cerebral venous sinus thrombosis.

The trained machine learning model can use provided patient data to extract information in the form of radiomics features, vision transformer features and convolutional neural network features as well as in the form of vision transformer attention maps and convolutional neural network segmentation masks. The radiomics features, vision transformer features, and convolutional neural network features can be fused into a joint feature vector, based upon which the reference patient is assigned to one of at least two classes, with at least one class including reference patients who have cerebral venous sinus thrombosis. The vision transformer attention maps and convolutional neural network segmentation masks can be combined into a combined (segmentation) mask, upon which an object-detection tool such as bounding box or segmentation can be applied to determine the region in the brain of the reference patient where cerebral venous sinus thrombosis is located.

The trained machine learning model then provides information to which class the patient was assigned and information about the location of cerebral venous sinus thrombosis in the brain of the patient. The processes for detecting the presence of and for determining the location of venous sinus thrombosis in a patient can be carried out in parallel, i.e., simultaneously, or sequentially, i.e., one after another. In a preferred embodiment, both processes are carried out simultaneously. In another preferred embodiment, the processes are carried out sequentially.

In a preferred embodiment of the computer-implemented method for detecting the presence and determining the location of cerebral venous sinus thrombosis in a patient, the training data and/or the patient data may additionally comprise non-image clinical data for the patient and/or each reference patient of the multitude of reference patients which can be used in the detection of CVST. Preferably, the detection of CVST in a (reference) patient, i.e., the assignment of said (reference) patient to one of at least two classes, wherein at least one class includes (reference) patients who have cerebral venous sinus thrombosis, is made based on the combination of data extracted from the at least one CT image, i.e., the joint feature vector and of information obtained from additional non-image clinical data. The additional information obtained from non-image data can be (i) in the form of a feature vector, which can be combined with the j oint feature vector or (ii) provided as additional input to assign the (reference) patient to one of at least two classes, with at least one class including (reference) patients who have cerebral venous sinus thrombosis.

In a further aspect, the present disclosure relates to a computer-implemented method for the generation of synthetic venography images (venograms). Venograms are the "gold standard" in CVST detection and it is therefore desirable to provide methods which can provide such images without subjecting the patient to the invasive procedures venography necessarily involves. The present disclosure addresses the need for the provision of venography data by providing a computer-implemented method for the generation of synthetic venography images (venograms) from CT or MRI image data, thus reducing and/or eliminating the need to subject a patient to strenuous, invasive venography procedures. Further, the synthetic venograms generated by the method described in the present disclosure can be used as training and/or patient data in any of the computer-implemented methods of the present disclosure described above for the detection and/or localization of CVST in a patient.

Thus, the present disclosure relates to a computer-implemented method for the generation of synthetic venograms, the method comprising the steps:
- receiving patient data, the patient data comprising at least one CT image and/or at least one MRI image of the brain of the patient,
- providing a trained GAN-based prediction model, wherein the prediction model is configured to
   ∘ receive the patient data,
   ∘ generate a synthetic venogram based on said patient data,
      wherein the prediction model was trained on the basis of training data, wherein the training data included, for each reference patient of a multitude of reference patients, (i) at least one CT image and/or the at least one MRI image of the brain of the reference patient, and (ii) at least one venogram of the brain of the reference patient,
      wherein the training included the following steps, for each reference patient:
   ∘ inputting the at least one CT image and/or the at least one MRI image of the brain of the reference patient into the GAN-based prediction model,
   ∘ receiving a synthetic venogram generated from the at least one CT image and/or the at least one MRI image of the brain of the reference patient,
- inputting the patient data into the prediction model,
- receiving a synthetic venogram from the prediction model,
- outputting the synthetic venogram, storing the synthetic venogram and/or transmitting the synthetic venogram to a separate computer system.

Training data and patient data are required in the computer-implemented method for the generation of synthetic venograms of the present invention. Both comprise at least one CT image and/or at least one MRI image of the brain of the (reference) patient. The at least one CT image and/or the at least one MRI image of the brain of the (reference) patient is preferably a CT image of the (reference) patient's brain acquired according to routine methods for computed tomography available in the art and/or an MRI image of the (reference) patient's brain acquired according to routine methods for magnetic resonance imaging available in the art, respectively. In addition, training data further comprises at least one venogram of the brain of the reference patient. The at least one venogram of the brain of the reference patient is preferably a venogram of the reference patient's brain acquired according to routine methods for contrast-enhanced venography available in the art.

The method of the present disclosure for the generation of synthetic venograms does not exclude the use of more than one CT image or of more than one MRI image as training and/or patient data. Further, it does not exclude the use of a combination of CT and MRI images, i.e., of at least one CT image and of at least one MRI image.

The images used as training and/or patient data, i.e., the at least one CT image and/or the at least one MRI image - and the at least one venogram in the case of training data - of the brain of the (reference) patient may need a so-called "pre-processing" step prior to their use in the computer-implemented method for the generation of synthetic venograms. Without being limiting, such "pre-processing" step may comprise the removal of the skull from the image(s), the alignment of the image(s) to an axis of symmetry, the normalization of the images and any other processes which enable the provision of (a) coherent, comparable and homogeneous image(s). Such a "pre-processing" step thus provides normalized, full-size symmetric CT, MRI and venography image(s).

A GAN-based prediction model is used in the method for the generation of synthetic venograms of the present invention.

In the field of machine learning, GAN stands for Generative Adversarial Network. GANs are a type of neural network architecture that consists of two components: a generator and a discriminator. GANs are primarily used for generating synthetic data samples that resemble a given training dataset.

The generator is responsible for generating a synthetic venogram based on at least one CT image and/or at least one MRI image. The quality of generated synthetic venograms improves as the generator learns from the feedback provided by the discriminator.

The discriminator, on the other hand, acts as a critic or classifier, distinguishing between real and synthetic venograms. It receives both real venograms from the training dataset and synthetic venograms generated by the generator. The discriminator's objective is to accurately classify the origin of each venogram.

During training, GANs engage in a two-player minimax game. The generator aims to fool the discriminator by generating synthetic venograms that the discriminator cannot differentiate from real ones. Simultaneously, the discriminator aims to correctly classify the generated synthetic venograms as fake while correctly identifying real venograms.

As the generator and discriminator continue to improve through adversarial interactions, the generator gradually learns to produce high-quality synthetic venograms that are realistic and indistinguishable from the real venograms. This iterative training process leads to the generator learning the underlying distribution of the training data.

Thus, the GAN-based prediction model is trained to generate synthetic venograms based on at least one CT image and/or at least one MRI image and on at least one venogram of the brain of the reference patient. The GAN's generator generates a synthetic venogram based on the at least one CT image and/or on the at least one MRI image and the discriminator aims to distinguish the synthetic venogram from a real venogram, i.e., the at least one venogram of the brain of the reference patient of the training data. The generator is trained to generate synthetic venograms which the discriminator cannot distinguish from real venograms, and the discriminator is trained for increasingly better distinguishing of the synthetic venograms, which are becoming increasingly better, from real venograms.

Thus, using patient data, a synthetic venogram generated from the at least one CT image and/or from the at least one MRI image of the brain of the reference patient is received from the trained, GAN-based prediction model. Said synthetic venogram - also called corresponding synthetic venography image - can then be further processed, i.e., it can be output, stored and/or transmitted to a separate computer system. In a preferred embodiment, the synthetic venogram can be transferred to an interactive GUI for visualization, thus allowing for the evaluation by a trained medical professional who can, for example, provide an evaluation score depending on his/her professional judgement. As a result, the output can be the venogram alone or a combination of the venogram and the medical professional's evaluation score.

Further, as described above, the synthetic venogram can also be fed into any of the computer-implemented methods described above for the detection and/or localization of CVST in a patient, i.e., it can be part of the training and/or patient data in any of said computer-implemented methods for the detection and/or localization of CVST in a patient.

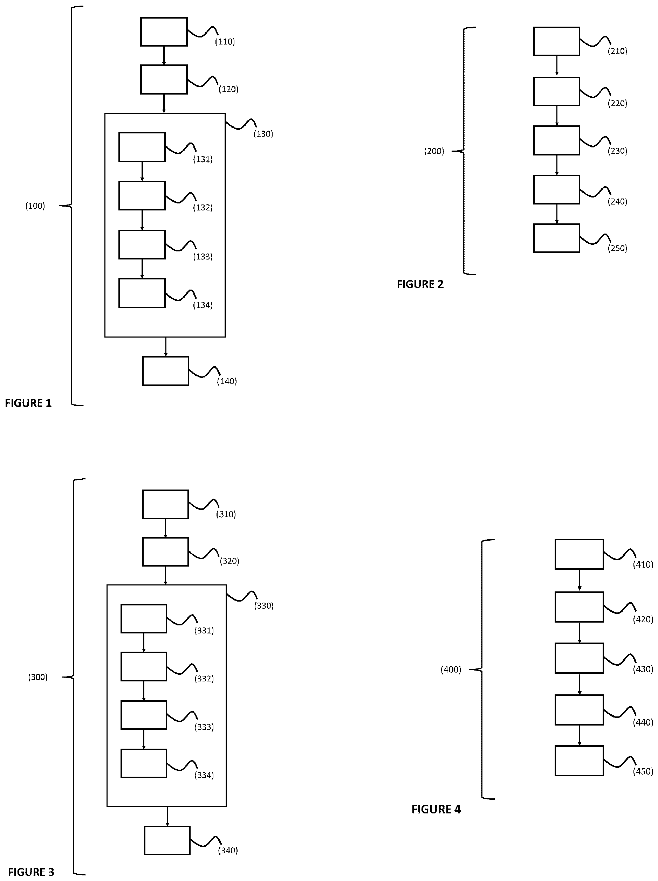

Fig. 1 shows schematically an embodiment of the computer-implemented method for generating a tool for detecting cerebral venous sinus thrombosis in a patient according to the present disclosure in form of a flow chart.

The method (100) comprises the steps:
(110) providing training data, the training data comprising for each reference patient of a multitude of reference patients (i) at least one CT image of the brain of the reference patient, and (ii) an information on whether or not the reference patient had cerebral venous sinus thrombosis at the time when the at least one CT image was obtained
(120) providing a machine learning model, wherein the machine learning model is configured to
   ∘ receive the at least one CT image of the reference patient,
   ∘ generate radiomics features based on the at least one CT image of the reference patient,
   ∘ generate vision transformer features based on the at least one CT image of the reference patient,
   ∘ generate convolutional neural network features based on the at least one CT image of the reference patient,
   ∘ fuse the radiomics features, the vision transformer features and the convolutional neural network features into a joint feature vector,
   ∘ assign the reference patient to one of at least two classes based on the joint feature vector, with at least one class including reference patients who have cerebral venous sinus thrombosis,
   ∘ output information to which class the reference patient was assigned,
(130) training the machine learning model with the training data, wherein the training of the machine learning model comprises the steps for each reference patient:
   (131) inputting the at least one CT image of the reference patient into the machine learning model,
   (132) receiving an output from the machine learning model,
   (133) determining a deviation between the output and the information whether the reference patient suffers from cerebral venous sinus thrombosis,
   (134) reducing the deviation by modifying parameters of the machine learning model,
(140) outputting and/or storing the trained machine learning model and/or transmitting the trained model to a separate computer system and/or using the trained machine learning model to detect cerebral venous sinus thrombosis in a patient.

Fig. 2 shows schematically an embodiment of the computer-implemented method for detecting cerebral venous sinus thrombosis in a patient according to the present disclosure in form of a flow chart.

The method (200) comprises the steps:
(210) receiving patient data, the patient data comprising at least one CT image of the brain of the patient,
(220) providing a trained machine learning model, wherein the machine learning model is configured to
   ▪ receive the at least one CT image of the patient,
   ▪ generate radiomics features based on the at least one CT image of the patient,
   ▪ generate vision transformer features based on the at least one CT image of the patient,
   ▪ generate convolutional neural network features based on the at least one CT image of the patient,
   ▪ fuse the radiomics features, the vision transformer features and the convolutional neural network features into a joint feature vector,
   ▪ assign the reference patient to one of at least two classes based on the joint feature vector, with at least one class including patients who have cerebral venous sinus thrombosis,
   ▪ output information to which class the patient was assigned,

   ∘ wherein the trained machine learning model was trained on training data, wherein the training data included, for each reference patient of a multitude of reference patients, (i) at least one CT image of the brain of the reference patient, and (ii) an information on whether or not the reference patient had cerebral venous sinus thrombosis at the time when the at least one CT image was obtained,
   ∘ wherein the training included the following steps for each reference patient:
      ▪ inputting the at least one CT image of the reference patient data into the machine learning model,
      ▪ receiving an output from the machine learning model,
      ▪ determining a deviation between the output and the information whether the reference patient suffers from cerebral venous sinus thrombosis,
      ▪ reducing the deviation by modifying parameters of the machine learning model,
(230) inputting the at least one CT image of the patient into the trained machine learning model,
(240) receiving from the trained machine learning model information to which class the patient was assigned,
(250) outputting and/or storing the information to which class the patient was assigned, and/or transmitting the information to which class the patient was assigned to a separate computer system.

Fig. 3 shows schematically an embodiment of the computer-implemented method for generating a tool for determining the location of cerebral venous sinus thrombosis in a patient suffering from CVST according to the present disclosure in form of a flow chart.

The method (300) comprises the steps:
(310) providing training data, the training data comprising for each reference patient of a multitude of reference patients (i) at least one CT image of the brain of the reference patient, and (ii) an information about the location of cerebral venous sinus thrombosis in the brain of the reference patient at the time when the at least one CT image was obtained
(320) providing a machine learning model, wherein the machine learning model is configured to
   ∘ receive the at least one CT image of the reference patient,
   ∘ generate vision transformer attention maps based on the at least one CT image of the reference patient,
   ∘ generate convolutional neural network segmentation masks based on the at least one CT image of the reference patient,
   ∘ combine the vision transformer attention maps and the convolutional neural network segmentation masks into a combined (segmentation) mask,
   ∘ determine a region in the brain of the reference patient where cerebral venous sinus thrombosis is located based on the combined (segmentation) mask,
   ∘ output information about the location of cerebral venous sinus thrombosis in the brain of the reference patient,
(330) training the machine learning model with the training data, wherein the training of the machine learning model comprises the steps for each reference patient:
   (331) inputting the at least one CT image of the reference patient into the machine learning model,
   (332) receiving an output from the machine learning model,
   (333) determining a deviation between the output and the information about the location of cerebral venous sinus thrombosis in the brain of the reference patient,
   (334) reducing the deviation by modifying parameters of the machine learning model,
(340) outputting and/or storing the trained machine learning model and/or transmitting the trained model to a separate computer system and/or using the trained machine learning model to determine a location of cerebral venous sinus thrombosis in a patient.

Fig. 4 shows schematically an embodiment of the computer-implemented method for determining the location of cerebral venous sinus thrombosis in a patient suffering from CVST according to the present disclosure in form of a flow chart.

The method (400) comprises the steps:
(410) receiving patient data, the patient data comprising at least one CT image of the brain of the patient,
(420) providing a trained machine learning model, wherein the machine learning model is configured to
   ∘ receive the at least one CT image of the patient,
   ∘ generate vision transformer attention maps based on the at least one CT image of the patient,
   ∘ generate convolutional neural network segmentation masks based on the at least one CT image of the patient,
   ∘ combine the vision transformer attention maps and the convolutional neural network segmentation masks into a combined (segmentation) mask,
   ∘ detect a region in the brain of the patient where cerebral venous sinus thrombosis is located,
   ∘ output information about the location of cerebral venous sinus thrombosis in the brain of the patient,
      wherein the trained machine learning model was trained on training data, wherein the training data included, for each reference patient of a multitude of reference patients, (i) at least one CT image of the brain of the reference patient, and (ii) an information about the location of cerebral venous sinus thrombosis in the brain of the reference patient at the time when the at least one CT image was obtained,
      wherein the training included the following steps for each reference patient:
         ▪ inputting the at least one CT image of the reference patient into the machine learning model,
         ▪ receiving an output from the machine learning model,
         ▪ determining a deviation between the output and the information about the location of cerebral venous sinus thrombosis in the brain of the reference patient,
         ▪ reducing the deviation by modifying parameters of the machine learning model,
(430) inputting the at least one CT image of the patient into the trained machine learning model,
(440) receiving from the trained machine learning model information about a location of cerebral venous sinus thrombosis in the brain of the patient,
(450) outputting the information about a location of cerebral venous sinus thrombosis in the brain of the patient, storing the information about a location of cerebral venous sinus thrombosis in the brain of the patient and/or transmitting the information about a location of cerebral venous sinus thrombosis in the brain of the patient to a separate computer system.

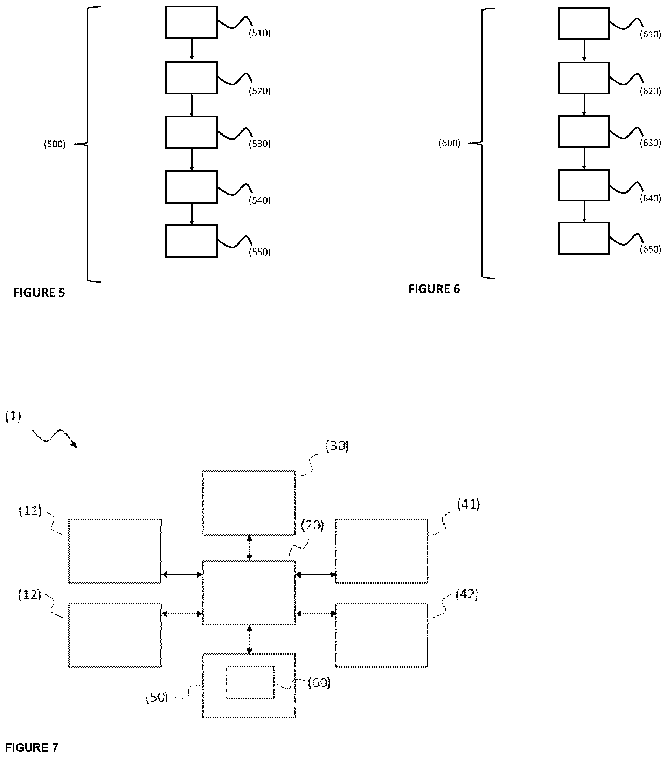

Fig. 5 shows schematically an embodiment of the computer-implemented method for detecting the presence and determining the location of venous sinus thrombosis in a patient wherein the processes for detecting the presence and for determining the location of venous sinus thrombosis in a patient are carried out in parallel, i.e., simultaneously, in the form of a flow chart.

The method (500) comprises the steps:
(510) receiving patient data, the patient data comprising at least one CT image of the brain of the patient,
(520) providing a trained machine learning model, wherein the machine learning model is configured to
   ▪ receive the at least one CT image of the patient,
   ▪ generate radiomics features based on the at least one CT image of the patient,
   ▪ generate vision transformer features based on the at least one CT image of the patient,
   ▪ generate convolutional neural network features based on the at least one CT image of the patient,
   ▪ fuse the radiomics features, the vision transformer features and the convolutional neural network features into a joint feature vector,
   ▪ assign the patient to one of at least two classes based on the joint feature vector, with at least one class including patients who have cerebral venous sinus thrombosis,
   ▪ output information to which class the patient was assigned,
      and wherein the machine learning model is also configured to
   ▪ receive the at least one CT image of the patient,
   ▪ generate vision transformer attention maps based on the at least one CT image of the patient,
   ▪ generate convolutional neural network segmentation masks based on the at least one CT image of the patient,
   ▪ combine the vision transformer attention maps and the convolutional neural network segmentation masks into a combined (segmentation) mask,
   ▪ detect a region in the brain of the patient where cerebral venous sinus thrombosis is located based on the combined (segmentation) mask,
   ▪ output information about the location of cerebral venous sinus thrombosis in the brain of the patient,
      wherein the trained machine learning model was trained on training data, wherein the training data included, for each reference patient of a multitude of reference patients, (i) at least one CT image of the brain of the reference patient, (ii) an information on whether or not the reference patient had cerebral venous sinus thrombosis at the time when the at least one CT image was obtained, and (iii) an information about the location of cerebral venous sinus thrombosis in the brain of the reference patient at the time when the at least one CT image was obtained,
      wherein the training included the following steps for each reference patient:
         ▪ inputting the at least one CT image of the reference patient into the machine learning model,
         ▪ receiving an output from the machine learning model, said output comprising information as to which class the reference patient was assigned and about a location of cerebral venous sinus thrombosis in the brain of the reference patient,
         ▪ determining a deviation (i) between the output and the information whether the reference patient suffers from thrombosis and (ii) between the output and the information about the location of cerebral venous sinus thrombosis in the brain of the reference patient,
         ▪ reducing the deviation (i) between the output and the information whether the reference patient suffers from thrombosis and/or (ii) between the output and the information about the location of cerebral venous sinus thrombosis in the brain of the reference patient by modifying parameters of the machine learning model,
(530) inputting the at least one CT image of the patient into the trained machine learning model,
(540) receiving from the trained machine learning model information to which class the patient was assigned and information about a location of cerebral venous sinus thrombosis in the brain of the reference patient,
(550) outputting the information to which class the patient was assigned and/or about the location of cerebral venous sinus thrombosis in the brain of the patient, storing the information to which class the patient was assigned and/or about the location of cerebral venous sinus thrombosis in the brain of the patient and/or transmitting the information to which class the patient was assigned and/or about the location of cerebral venous sinus thrombosis in the brain of the patient to a separate computer system.

Fig. 6 shows schematically an embodiment of the computer-implemented method for the generation of synthetic venograms according to the present disclosure in form of a flow chart.

The method (600) comprises the steps:
(610) receiving patient data, the patient data comprising at least one CT image and/or at least one MRI image of the brain of the patient,
(620) providing a trained GAN-based prediction model, wherein the prediction model is configured to
   - receive the patient data,
   - generate a synthetic venogram based on said patient data,
   - wherein the prediction model was trained on the basis of training data, wherein the training data included, for each reference patient of a multitude of reference patients, (i) at least one CT image and/or at least one MRI image of the brain of the reference patient, and (ii) at least one venogram of the brain of the reference patient,
   wherein the training included the following steps, for each reference patient:
   - inputting the at least one CT image and/or at least one MRI image of the brain of the reference patient into the GAN-based prediction model,
   - receiving a synthetic venogram generated from the at least one CT image and/or the at least one MRI image of the brain of the reference patient,
(630) inputting the patient data into the prediction model,
(640) receiving a synthetic venogram of the patient from the prediction model,
(650) outputting the synthetic venogram of the patient, storing the synthetic venogram of the patient and/or transmitting the synthetic venogram of the patient to a separate computer system.

The operations in accordance with the teachings herein may be performed by at least one computer system specially constructed for the desired purposes or general-purpose computer system specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the invention.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

Fig. 7 shows schematically a computer system (1) according to some example computer-implemented methods of the present disclosure in more detail.

Generally, a computer system of exemplary implementations of the computer-implemented methods of the present disclosure may be referred to as a computer and may comprise, include, or be embodied in one or more fixed or portable electronic devices. The computer may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information. The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs, which may be stored onboard the processing unit (20) or otherwise stored in the memory (50) of the same or another computer.

The processing unit (20) may be a number of processors, a multi-core processor or some other type of processor, depending on the particular implementation. For example, it may be a central processing unit (CPU), a field programmable gate array (FPGA), a graphics processing unit (GPU) and/or a tensor processing unit (TPU). Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program to perform one or more functions, the processing unit (20) of various examples may be capable of performing one or more functions without the aid of a computer program. In either instance, the processing unit (20) may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory (50) may include volatile and/or non-volatile memory and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium or data memory. The computer-readable storage medium is a non-transitory device capable of storing information and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (screen) may be configured to present or otherwise display information to a user, suitable examples of which include a liquid crystal display (LCD), light-emitting diode display (LED), plasma display panel (PDP) or the like. The user input interface(s) (11) may be wired or wireless and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions (60) may be stored in memory (50) and executed by processing unit (20) that is thereby programmed, to implement functions of the systems, subsystems, tools and their respective elements described herein. As will be appreciated, any suitable program code instructions (60) may be loaded onto a computer or other programmable apparatus from a computer-readable storage medium to produce a particular machine, such that the particular machine becomes a means for implementing the functions specified herein. These program code instructions (60) may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions (60) may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions (60) may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions (60) may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code instructions (60) stored in the memory (50). It will also be understood that one or more functions, and combinations of functions, may be implemented by special purpose hardware-based computer systems and/or processing circuitry which perform the specified functions, or combinations of special purpose hardware and program code instructions.

The computer system of the present disclosure may be in the form of a laptop, notebook, netbook, and/or tablet PC; it may also be a component of an MRI scanner, a CT scanner, or an ultrasound diagnostic machine.

In another aspect, the present disclosure provides a computer program product. Such a computer program product comprises a non-volatile data carrier, such as a CD, a DVD, a USB stick or other medium for storing data. A computer program is stored on the data carrier. The computer program can be loaded into a working memory of a computer system (in particular, into a working memory of a computer system of the present disclosure), where it can cause the computer system to perform any of the computer-implemented methods described throughout the present disclosure, e.g., a computer-implemented method for generating a tool for detecting cerebral venous sinus thrombosis in a patient, a computer-implemented method for detecting cerebral venous sinus thrombosis in a patient, a computer-implemented method for generating a tool for determining the location of cerebral venous sinus thrombosis in a patient suffering from CVST, a computer-implemented method for determining the location of cerebral venous sinus thrombosis in a patient suffering from CVST, a computer-implemented method for detecting the presence and determining the location of venous sinus thrombosis in a patient and/or a computer-implemented method for the generation of synthetic venograms.

The computer program product may also be marketed in combination with a contrast agent, preferably a contrast agent suitable for generating the at least one CT image of the (reference) patient. Such a combination is also referred to as a kit. Such a kit includes the contrast agent and the computer program product. It is also possible that such a kit includes the contrast agent and means for allowing a purchaser to obtain the computer program, e.g., download it from an Internet site. These means may include a link, i.e., an address of the Internet site from which the computer program may be obtained, e.g., from which the computer program may be downloaded to a computer system connected to the Internet. Such means may include a code (e.g., an alphanumeric string or a QR code, or a DataMatrix code or a barcode or other optically and/or electronically readable code) by which the purchaser can access the computer program. Such a link and/or code may, for example, be printed on a package of the contrast agent and/or printed on a package insert for the contrast agent. A kit is thus a combination product comprising a contrast agent and a computer program (e.g., in the form of access to the computer program or in the form of executable program code on a data carrier) that is offered for sale together.

## Claims

1. A computer-implemented method for detecting the presence and/or determining the location of cerebral venous sinus thrombosis (CVST) in a patient, the method comprising the steps:
- receiving patient data, the patient data comprising at least one CT image of the brain of the patient,
- providing a trained machine learning model,
∘ wherein for detecting the presence of CVST in a patient the machine learning model is configured to
▪ receive the at least one CT image of the patient,
▪ generate radiomics features based on the at least one CT image of the patient,
▪ generate vision transformer features based on the at least one CT image of the patient,
▪ generate convolutional neural network features based on the at least one CT image of the patient,
▪ fuse the radiomics features, the vision transformer features and the convolutional neural network features into a joint feature vector,
▪ assign the patient to one of at least two classes based on the joint feature vector, with at least one class including patients who have cerebral venous sinus thrombosis,
▪ output information to which class the patient was assigned,
∘ wherein for determining the location of CVST in a patient the machine learning model is also configured to
▪ receive the at least one CT image of the patient,
▪ generate vision transformer attention maps based on the at least one CT image of the patient,
▪ generate convolutional neural network segmentation masks based on the at least one CT image of the patient,
▪ combine the vision transformer attention maps and the convolutional neural network segmentation masks into a combined (segmentation) mask,
▪ detect a region in the brain of the patient where cerebral venous sinus thrombosis is located based on the combined (segmentation) mask,
▪ output information about the location of cerebral venous sinus thrombosis in the brain of the patient,
∘ wherein the trained machine learning model was trained on training data, wherein the training data included, for each reference patient of a multitude of reference patients, (i) at least one CT image of the brain of the reference patient, (ii) an information on whether or not the reference patient had cerebral venous sinus thrombosis at the time when the at least one CT image was obtained, and (iii) an information about the location of cerebral venous sinus thrombosis in the brain of the reference patient at the time when the at least one CT image was obtained,
∘ wherein the training included the following steps:
for each reference patient:
▪ inputting the at least one CT image of the reference patient into the machine learning model,
▪ receiving an output from the machine learning model, said output comprising information as to which class the reference patient was assigned and/or about a location of cerebral venous sinus thrombosis in the brain of the reference patient,
▪ determining a deviation (i) between the output and the information whether the reference patient suffers from thrombosis and (ii) between the output and the information about the location of cerebral venous sinus thrombosis in the brain of the reference patient,
▪ reducing the deviation (i) between the output and the information whether the reference patient suffers from thrombosis and/or (ii) between the output and the information about the location of cerebral venous sinus thrombosis in the brain of the reference patient by modifying parameters of the machine learning model,
- inputting the at least one CT image of the patient into the trained machine learning model,
- receiving from the trained machine learning model information to which class the patient was assigned and/or information about a location of cerebral venous sinus thrombosis in the brain of the reference patient,
- outputting the information to which class the patient was assigned and/or about the location of cerebral venous sinus thrombosis in the brain of the patient, storing the information to which class the patient was assigned and/or about the location of cerebral venous sinus thrombosis in the brain of the patient and/or transmitting the information to which class the patient was assigned and/or about the location of cerebral venous sinus thrombosis in the brain of the patient to a separate computer system.

2. The computer-implemented method according to claim 1, wherein the method only comprises detecting the presence of cerebral venous sinus thrombosis (CVST) in a patient.

3. The computer-implemented method according to claim 1, wherein the method only comprises determining the location of cerebral venous sinus thrombosis (CVST) in a patient.

4. The computer-implemented method according to any of claims 1 or 2, wherein the patient and/or training data comprises non-image clinical data of the (reference) patient.

5. The computer-implemented method according to claim 4, wherein the non-image clinical data of the (reference) is in the form of a feature vector.

6. The computer-implemented method according to any of claim 1 or 3, wherein the combined (segmentation) mask is post-processed, preferably wherein the combined (segmentation) mask is post-processed by bounding box detection and/or segmentation.

7. The computer-implemented method according to any of claims 1 to 6, wherein the vision transformer features and/or the vision transformer attention maps are generated using DinoV2.

8. A computer-implemented method for the generation of synthetic venograms, the method comprising the steps:
• receiving patient data, the patient data comprising at least one CT image and/or at least one MRI image of the brain of the patient,
• providing a trained GAN-based prediction model, wherein the prediction model is configured to
∘ receive the patient data,
∘ generate a synthetic venogram based on said patient data,
wherein the prediction model was trained on the basis of training data, wherein the training data included, for each reference patient of a multitude of reference patients, (i) at least one CT image and/or the at least one MRI image of the brain of the reference patient, and (ii) at least one venogram of the brain of the reference patient,
wherein the training included the following steps, for each reference patient:
∘ inputting the at least one CT image and/or the at least one MRI image of the brain of the reference patient into the GAN-based prediction model,
∘ receiving a synthetic venogram generated from the at least one CT image and/or the at least one MRI image of the brain of the reference patient,
• inputting the patient data into the prediction model,
• receiving a synthetic venogram from the prediction model,
outputting the synthetic venogram, storing the synthetic venogram and/or transmitting the synthetic venogram to a separate computer system.

9. The computer-implemented method according to any of claims 1 to 7, wherein the patient and/or training data additionally comprises a synthetic venogram generated according to the computer-implemented method of claim 8.

10. A computer system comprising (i) a processor; and (ii) a memory storing an application program configured to perform, when executed by the processor, an operation, the operation comprising the computer-implemented method according to any of claims 1 to 9.

11. A non-transitory computer readable storage medium having stored thereon software instructions that, when executed by a processor of a computer system, cause the computer system to execute the computer-implemented method according to any of claims 1 to 9.
